Europäisches Patentamt

(19) European Patent Office

Office européen des brevets

(11) Veröffentlichungsnummer: **0 249 793**
**B1**

(12) ## EUROPÄISCHE PATENTSCHRIFT

(45) Veröffentlichungstag der Patentschrift:
31.10.90

(51) Int. Cl.5: **A22C 13/00**

(21) Anmeldenummer: **87107955.4**

(22) Anmeldetag: **02.06.87**

(54) Schlauchförmige Verpackungshülle.

(30) Priorität: **14.06.86 DE 3620165**

(43) Veröffentlichungstag der Anmeldung:
**23.12.87 Patentblatt 87/52**

(45) Bekanntmachung des Hinweises auf die Patenterteilung:
**31.10.90 Patentblatt 90/44**

(84) Benannte Vertragsstaaten:
**BE DE FR NL**

(56) Entgegenhaltungen:
EP-A- 0 088 308
EP-A- 0 156 237
DE-A- 3 240 847
DE-A- 3 416 406
DE-B- 1 492 708

(73) Patentinhaber: **Wolff Walsrode Aktiengesellschaft,
Postfach, D-3030 Walsrode 1(DE)**

(72) Erfinder: **Wilke, Michaela, Dr., Eichendorffstrasse 103,
D-3043 Schneverdingen(DE)**
Erfinder: **Klusik, Hartmut, Dr., Grosse Heide 12,
D-3032 Fallingbostel(DE)**
Erfinder: **Balser, Klaus, Dr., Am Badeteich 16,
D-3030 Walsrode 1(DE)**

(74) Vertreter: **Zobel, Manfred, Dr. et al, c/o BAYER AG
Konzernverwaltung RP Patentabteilung Bayerwerk,
D-5090 Leverkusen(DE)**

## Beschreibung

Die Erfindung bezieht sich auf Schlauchhülen, vorzugsweise Nahrungsmittelhüllen aus regenerierter Cellulose, die eine verbesserte Haftung zu ihrer Füllung aufweisen.

Schlauchförmige Hüllen, insbesondere aus regenerierter Cellulose, sind als Verpackungsmaterialien für Nahrungsmittel vielfältig im Einsatz und werden in sehr großem Umfang für die Herstellung von verarbeiteten Fleischprodukten wie Wurstwaren verwendet. Wird die Innenseite solcher Nahrungsmittelhüllen unbehandelt verwendet, so beobachtet man, daß bei der Wurstherstellung, insbesondere der Rohwurstherstellung, das Brät nicht fest genug an der Wursthülle haftet. Infolgedessen kommt es bei der Wurst zu teilweisem Ablösen von der Wursthülle, häufig verbunden mit einer unerwünschten Ausbildung eines Öl- oder Geleefilmes auf dem Wurstgut.

Wegen des Ablösens schrumpft auch die Nahrungsmittelhülle nicht mehr mit dem Füllgut, so daß die Wurst faltig und unansehnlich erscheint.

Um diese genannten Nachteile zu beheben, ist es üblich, die Innenseite der Nahrungsmittelschlauchhülle aus regenerierter Cellulose mit einer Beschichtung auf Basis Polyethylenimin, chemisch modifizierter Eiweiße, Epichlorhydrin-, Polyamin-Polyamid-, Harnstoff- oder Melamin-Formaldehyd-Harze zu versehen, s. EP-A-88 308 und US-A-3 378 379.

Diese Innenausrüstung von Nahrungsmittelschlauchhüllen führt zwar zu einer Verbesserung der Haftung, die aber für einige Anwendungszwecke, wie auch der Rohwurstherstellung, nicht ausreichend ist. Außerdem beobachtet man, daß so innenbeschichtete Schlauchhüllen verkleben können und dadurch das Öffnen und Füllen stark behindert werden kann.

Im deutschen Gebrauchsmuster G 8 436 989.2 wird der Einsatz von Gluconsäure-delta-lacton als Bestandteil des Überzuges der inneren Oberfläche beschrieben. Allerdings dient dieser Zusatz lediglich der Verbesserung der Optik der hergestellten Rohwürste und nicht der Verbesserung der Bräthaftung.

Zwar werden bei der Herstellung der Überzüge nach DE-A 3 240 847 auch Salze von Säuren aus der Gruppe Propionsäure, Sorbinsäure, Ascorbinsäure, Benzoesäure, Parahydroxybenzoesäure, Parachlorbenzoesäure, Paramethoxybenzoesäure, bevorzugt Sorbinsäure zusammen mit bestimmten kationischen Polymeren verwendet. Die Salze der Säuren reagieren aber laut eindeutigen Angaben in dieser Druckschrift mit den Polymeren; auch ist die Aufgabestellung eine andere.

Ziel der vorliegenden Erfindung war es daher, eine schlauchförmige Verpackungshülle, vorzugsweise eine schlauchförmige Nahrungsmittelhülle, insbesondere aus regenerierter Cellulose, zur Verfügung zu stellen, die aufgrund ihrer speziellen Innenbeschichtung eine ausgezeichnete Haftung zum Füllgut aufweist und problemlos verarbeitet werden kann.

Dies gelingt mit den erfindungsgemäßen schlauchförmigen Verpackungshüllen, insbesondere Nahrungsmittelhüllen, insbesondere aus regenerierter Cellulose, die sich dadurch auszeichnen, daß sie eine Innenbeschichtung aus filmbildenden Kunststoffharzen aufweisen, die 10 bis 200 mg/m², vorzugsweise 20 bis 80 mg/m² Innenbeschichtung eines vorzugsweise wasserlöslichen Eiweißkoagulans mit wenigstens einer Carboxylgruppe oder ein Salz davon enthalten.

Sowohl die Auswahl des filmbildenden Polymeren als auch des Eiweißkoagulans erfolgt nach ihrer toxikologischen Unbedenklichkeit. Daher werden als filmbildende Polymere vorzugsweise eiweißähnliche chemische Verbindungen eingesetzt, die schon zur Innenbeschichtung von Wursthüllen bereits verwendet wurden, wie chemisch modifizierte Eiweiße, kationische Polymere wie z.B. Epichlorhydrin-, Polyamin-Polyamidharze (Polyaminoamidharze), Polyethyleniminharze, Harnstoff- oder Melamin-Formaldehydharze. Vorzugsweise werden Polyaminoamid- oder Polyethyleniminharze eingesetzt. Sie sollen in üblichen Mengen aus wäßrigen Lösungen, enthaltend 0,5 - 5, vorzugsweise 1 bis 3 Gew.-% Harz, aufgetragen werden.

Als Eiweißkoagulans eignen sich vorzugsweise monomolekulare, organische, vorzugsweise aliphatische, gegebenenfalls ungesättigte Mono- oder Polycarbonsäuren, die weitere funktionelle Gruppen, vorzugsweise OH-Gruppen, enthalten können, oder deren Salze, vorzugsweise Alkalisalze. Beispielhaft können für solche Verbindungen Weinsäure, Zitronensäure, Ascorbinsäure, Tetrahydroxyadipinsäure und Sorbinsäure aufgeführt werden.

Überraschenderweise zeigen nun die schlauchförmigen Nahrungsmittelhüllen, die mit der erfindungsgemäßen Innenausrüstung versehen sind, eine bessere Bräthaftung.

Die Herstellung von schlauchförmigen Verpackungshüllen aus regenerierter Cellulose, die gegebenenfalls faserverstärkt und gegebenenfalls in bekannter Weise außenlackiert sein können, durch Extrusion oder Verspinnen ist allgemein bekannt. Dabei wird der gegebenenfalls faserverstärkte Schlauch in der letzten Stufe seiner Herstellung koaguliert, regeneriert, gewaschen, weichgemacht und anschließend getrocknet. Die erfindungsgemäße Innenausrüstung der schlauchförmigen Hülle kann vorzugsweise während des Herstellungsprozesses der Hülle aus regenerierter Cellulose oder nach deren Trocknung erfolgen. Dabei wird in üblicher Weise eine wäßrige Lösung, vorzugsweise eine 0,5 bis 5 gew.-%ige, insbesondere eine 1 bis 3 gew.-%ige, wäßrige Lösung des filmbildenden Polymeren, die außerdem das wasserlösliche Eiweißkoagulans in Mengen von 0,5 bis 5, vorzugsweise 1 bis 3 Gew.-% enthält, in die Schlauchhülle eingefüllt. Bei der kontinuierlichen Herstellung der Schlauchhülle läuft die Innenfüllung mit, benetzt die innere Oberfläche der Schlauchhülle und wird durch die anschließende Trocknung der Hülle in üblicher Weise fest mit dieser verankert.

Dabei zeigt sich, daß die erfindungsgemäß ausgerüstete Schlauchhülle nicht nur eine ausgezeichnete Haftung zum Wurstbrät aufweist, sondern daß auch die weitere Verarbeitung der innenbeschichteten Hülle, z.B. das Öffnen und Füllen, ohne Schwierigkeiten erfolgen kann. Weiterhin weist die Haftung keine Schwankungen auf, die sonst bei den bekannten Innenbeschichtungen durch Erschöpfung der Imprägnierlösung gegeben ist, da durch Messung des pH-Wertes und Vergleich mit dem ursprünglich eingestellten pH der Imprägnierlösung die gleichbleibende Qualität der Beschichtungslösung kontrolliert werden kann.

Diese Innenausrüstung ist auf Cellulosedärme, mit und ohne Faserverstärkung, gegebenenfalls mit einer Außenlackierung und beliebigen Einfärbungen bzw. Pigmentierungen, anwendbar. Sie kann ebenfalls bei Kunstdärmen aus anderen Grundmaterialien angewandt werden.

Gegenstand der Erfindung ist schließlich weiterhin die Verwendung der erfindungsgemäßen Verpackunghüllen zum Verpacken von Nahrungsmitteln, insbesondere Wurstbrät.

Beispiele

Die für die zusätzliche Innenausrüstung vorgesehenen schlauchförmigen Verpackungshüllen waren folgendermaßen hergestellt worden:

Eine Hanfpapierbahn wurde verfahrensüblich zu einem Schlauch geformt und von einer oder beiden Seiten mit Cellulose-Xanthogenat-Lösung beschichtet, regeneriert, weichgemacht und getrocknet.

Die Behandlungslösung wurde entweder vor oder nach der Trocknung auf der inneren Oberfläche aufgebracht.

Die Herstellung der Musterwürste mit Rohwurst- bzw. Brühwurstbrät als Füllgut erfolgte verfahrensüblich. Die Wursthüllen wurden vor dem Füllvorgang bestimmungsgemäß gewässert.

PEI = Polyethylenimin
PAA = Polyaminoamid
Sämtliche Angaben beziehen sich auf Gew.-% in wäßriger Lösung.

Beispiel 1

Bei der kontinuierlichen Herstellung wurde ein rauchfarbener, einseitig viskosierter Faserdarm, Kaliber 65, im nassen Zustand mit 3 l wäßriger Beschichtungslösung, enthaltend 1 Gew.-% Ascorbinsäure und 1 Gew.-% PEI-Harz, gefüllt und die innere Oberfläche über einen Abschnitt von 500 m Länge damit ausgerüstet.

Der pH der Beschichtungslösung betrug 4,10. Der Flächenauftrag an Ascorbinsäure liegt nach 500 m Ausführung bei 16 mg/m$^2$ Innenbeschichtung.

Die mit der oben angegebenen Mischung innenausgerüsteten Hüllen wurden nach üblicher Arbeitsweise mit Rohwurstbrät und mit Brühwurstbrät gefüllt und nach der verfahrensbedingten Lagerung geschält.

Resultate:

a) Füllung mit Rohwurstbrät

Die Hülle hatte nach der Reifezeit der Wurst nicht abgestellt, zeigte beim Abschälen starke Haftung zum Brät und keinerlei Ölabscheidung.

b) Füllung mit Brühwurstbrät

Die Hülle wurde nach einem Tag abgeschält und wies starke Bräthaftung mit einem vollflächigen Brätrasen auf. Ein Geleeabsatz konnte nicht festgestellt werden.

Beispiel 2

Ein ca. 1,50 m langer Abschnitt eines naturfarbenen, einseitig viskosierten Faserdarmes, Kaliber 55, wurde im trockenen Zustand mit einer wäßrigen Lösung, enthaltend 3 Gew.-% Ascorbinsäure und 1 Gew.-% PAA-Harz, auf der Innenseite behandelt.

Die so behandelten Hüllen wurden mit Brühwurstbrät nach dem üblichen Verfahren gefüllt und am darauffolgenden Tag abgeschält. Die Hülle wies starke Haftung zum Brät auf und zeigte keinerlei Gelee-Absatz.

Beispiel 3

Ein ca. 1,50 m langer Abschnitt des in Beispiel 2 beschriebenen Faserdarmes wurde im trockenen Zustand auf der inneren Oberfläche mit einer wäßrigen Beschichtungslösung, enthaltend 0,5 Gew.-% Sorbinsäure und 1 Gew.-% PEI-Harz, ausgerüstet.

Mit den so innen ausgerüsteten Hüllen wurden nach dem üblichen Herstellungsverfahren Rohwürste angefertigt und nach der reifebedingten Lagerung abgeschält.

Die Hülle hatte vom Füllgut nicht abgestellt und wies beim Schälen sehr gute Haftung zum Brät auf. Ein Ölabsatz konnte nicht festgestellt werden.

Beispiel 4

Der in Beispiel 2 angegebene Faserdarm wurde in einem Abschnitt von ca. 1,50 m Länge im trockenen Zustand mit einer wäßrigen Beschichtungslösung, enthaltend 1 Gew.-% Zitronensäure und 1 Gew.-% PAA-Harz, beschichtet.

Die auf der inneren Oberfläche behandelten Verpackungshüllen wurden zur Herstellung von Brühwürsten eingesetzt und nach einem Tag abgeschält. Die Hüllen wiesen eine starke Haftung zum Füllgut auf, mit vollflächigem Brätrasen an der Innenseite der abgeschälten Hülle.

Beispiel 5

Bei der kontinuierlichen Herstellung wurde ein naturfarbener, einseitig viskosierter Faserdarm, Kaliber 58, im nassen Zustand über einen Abschnitt von ca. 1.200 m auf der inneren Oberfläche mit einer wäßrigen Lösung (pH 2,83), enthaltend 1,5 Gew.-% Zitronensäure und 1 Gew.-% PEI-Harz, beschichtet.

Es wurden alle 100 m Proben gezogen und diese mit Rohwurstbrät gefüllt. Nach der reifebedingten Lagerung wurde die Hülle abgeschält. Es zeigte sich in keinem Fall eine Ölabscheidung auf dem Wurstzylinder. Alle Muster wiesen starke Haftung zwischen Hülle und Füllgut auf.

Beispiel 6

Bei der kontinuierlichen Herstellung wurde ein weiß eingefärbter, beidseitig viskosierter Faserdarm, Kaliber 59, im nassen Zustand auf der inneren Oberfläche über eine Länge von ca. 1.100 m mit einer Beschichtungslösung, enthaltend 1,5 Gew.-% Zitronensäure und 1 Gew.-% PEI-Harz, beschichtet (pH der Lösung: 3,05).

Nach jeweils 100 m wurde eine Probe gezogen und eine Füllung mit Rohwurstbrät vorgenommen. Nach der reifebedingten Lagerung wurden die Wursthüllen abgeschält. Bei keinem Muster wurde Ölabscheidung festgestellt. Alle Hüllen hafteten beim Schälvorgang stark am Füllgut. Bei keinem der Muster konnte Graufleckigkeit der Hülle festgestellt werden.

Beispiel 7

Ein creme eingefärbter, beidseitig viskosierter und außenlackierter Faserdarm, Kaliber 60, wurde auf der Innenseite eines Abschnittes von ca. 1,50 m Länge im trockenen Zustand mit der wäßrigen Lösung, enthaltend 3 Gew.-% Zitronensäure und 2 Gew.-% PEI-Harz, beschichtet.

Die Hüllen wurden mit Brühwurstbrät gefüllt und nach 10 Tagen abgeschält. Beim Abschälvorgang zeigten die Würste gute Haftung zwischen Hülle und Füllgut sowie keinen Gelee-Absatz auf dem Wurstzylinder.

Beispiel 8

Ein weiß eingefärbter, beidseitig viskosierter Faserdarm, Kaliber 60, wurde auf der Innenseite eines Abschnittes von ca. 1,50 cm Länge im feuchten Zustand mit der wäßrigen Lösung, enthaltend 0,5 Gew.-% Tetrahydroxyadipinsäure und 1 Gew.-% PEI-Harz, beschichtet.

Die Hüllen wurden mit Rohwurstbrät gefüllt und nach der reifebedingten Lagerung abgeschält. Die Hüllen hafteten stark am Füllgut. Es wurde keine Ölabscheidung festgestellt.

Vergleichsbeispiel 1

Ein cremefarbener, einseitig viskosierter und außenlackierter Faserdarm, Kaliber 60, wurde auf der Innenseite eines Abschnittes von ca. 1,50 m Länge im trockenen Zustand mit einer Beschichtungslösung, enthaltend 3 Gew.-% eines Polyethylenimin-Harzes, beschicht.

Die Hüllen wurden mit Brühwurstbrät gefüllt und nach 10 Tagen abgeschält. Es zeigte sich Gelee-Absatz; außerdem konnte keine ausreichende Haftung der Hülle am Füllgut festgestellt werden.

Vergleichsbeispiel 2

Ein ca. 1,50 m langer Abschnitt eines naturfarbenen, einseitig viskosierten Faserdarms, Kaliber 55, wurde auf der Innenseite im trockenen Zustand mit folgender Lösung behandelt:

1 %ige wäßrige Lösung eines Polyethyleniminharzes Die Hülle wurde mit Brühwurstbrät gefüllt und nach einem Tag geschält. Die Hülle wies keine ausreichende Haftung zum Füllgut auf.

**Patentansprüche**

1. Schlauchförmige Verpackungshülle, insbesondere Nahrungsmittelhülle, dadurch gekennzeichnet, daß sie eine Innenbeschichtung aus filmbildenden Kunststoffharzen aufweisen, die 10 bis 200 mg/m² Innenbeschichtung eines Eiweißkoagulans mit wenigstens einer Carboxylgruppe oder ein Salz davon enthält.

2. Verpackungshülle nach Anspruch 1, dadurch gekennzeichnet, daß die Innenbeschichtung 20 - 80 mg/m² Innenbeschichtung eines Eiweißkoagulans enthält.

3. Verpackungshülle nach Anspruch 1 oder 2, dadurch gekennzeichnet, daß als Eiweißkoagulans wenigstens eine monomolekulare, organische, vorzugsweise aliphatische, gegebenenfalls ungesättigte Mono- oder Polycarbonsäure, die weitere funktionelle Gruppen enthalten können, oder deren Derivate wie z.B. Salze eingesetzt wird.

4. Verpackungshülle nach Anspruch 3, dadurch gekennzeichnet, daß Weinsäure, Zitronensäure, Ascorbinsäure, Tetrahydroxyadipinsäure oder Sorbinsäure eingesetzt wird.

5. Verpackungshülle nach Ansprüchen 1 - 4, dadurch gekennzeichnet, daß als filmbildende Kunststoffharze Epichlorhydrin-, Polyamin-Polyamidharze, Polyethyleniminharze, Harnstoff- oder Melamin-Formaldehydharze verwendet werden.

6. Verpackungshülle nach wenigstens einem der vorhergehenden Ansprüche, dadurch gekennzeichnet, daß sie im wesentlichen aus regenerierter Cellulose besteht.

7. Verwendung der Verpackungshülle gemäß wenigstens einem der vorhergehenden Ansprüche zum Verpacken von Nahrungsmitteln.

**Claims**

1. A tubular packaging casing, more especially a food casing, characterized in that it has an inner coating of film-forming synthetic resins containing 10 to 200 mg/m² inner coating of a protein coagulant containing at least one carboxyl group or a salt thereof.

2. A casing as claimed in claim 1, characterized in that the inner coating contains 20 to 80 mg/m² inner coating of a protein coagulant.

3. A casing as claimed in claim 1 or 2, characterized in that at least one monomolecular, organic, preferably aliphatic, optionally unsaturated mono- or polycarboxylic acid, which may contain other functional groups, or derivatives, for example salts, thereof is used as the protein coagulant.

4. A casing as claimed in claim 3, characterized in that tartaric acid, citric acid, ascorbic acid, tetrahydroxyadipic acid or sorbic acid is used.

5. A casing as claimed in claims 1 to 4, characterized in that epichlorohydrin-, polyamine-polyamide resins, polyethylene imine resins, urea- or melamine-formaldehyde resins are used as the film-forming synthetic resins.

6. A casing as claimed in at least one of the preceding claims, characterized in that it consists essentially of regenerated cellulose.

7. The use of the casing claimed in at least one of the preceding claims for the packaging of foods.

**Revendications**

1. Enveloppe tubulaire d'emballage, notamment enveloppe pour produits alimentaires, caractérisée en ce qu'elle présente une couche intérieure formée de résines synthétiques filmogènes, qui contient 10 à 200 mg/m² d'un revêtement intérieur d'un agent de coagulation de l'albumine portant au moins un groupe carboxyle ou un sel correspondant.

2. Enveloppe d'emballage suivant la revendication 1, caractérisée en ce que la couche intérieure contient, par m², 20 à 80 mg d'un agent de coagulation de l'albumine.

3. Enveloppe d'emballage suivant la revendication 1 ou 2, caractérisée en ce qu'on utilise comme agent de coagulation de l'albumine au moins un acide monocarboxylique ou polycarboxylique mono-moléculaire organique, de préférence aliphatique, éventuellement non saturé, pouvant contenir d'autres groupes fonctionnels, ou des dérivés de ces acides tels que, par exemple, leurs sels.

4. Enveloppe d'emballage suivant la revendication 3, caractérisée en ce qu'on utilise de l'acide tartrique, de l'acide citrique, de l'acide ascorbique, de l'acide tétrahydroxyadipique ou de l'acide sorbique.

5. Enveloppe d'emballage suivant les revendications 1 à 4, caractérisée en ce qu'on utilise comme résines synthétiques filmogènes des résines d'épichlorhydrine, des résines de polyamine-polyamide, des résines de polyéthylène-imine, des résines d'urée-formaldéhyde ou des résines de mélamine-formaldéhyde.

6. Enveloppe d'emballage suivant au moins l'une des revendications précédentes, caractérisée en ce qu'elle est principalement constituée de cellulose régénérée.

7. Utilisation de l'enveloppe d'emballage suivant au moins l'une des revendications précédentes pour l'emballage de produits alimentaires.